# EUROPEAN PATENT APPLICATION

(11) **EP 4 838 682 A1**
(43) Date of publication of application: **11.11.2026**
(21) Application number: 26151148.9
(22) Date of filing: 09.01.2026
(51) Int. Cl.: H01M 50/533, H01M 50/536

(54) **SECONDARY BATTERY**

(30) Priority: 07.05.2025 KR 20250058730
(71) Applicant: SAMSUNG SDI CO., LTD., Yongin-si, Gyeonggi-do 17084 (KR)
(72) Inventor: KO, Hee Jung, Yongin-si, Gyeonggi-do 17084 (KR)
(74) Representative: Maiwald GmbH

(57) **Abstract**

The present disclosure relates to a secondary battery in which in a collector plate that electrically connects an electrode assembly and a cap assembly, or electrically connects a case and an electrode assembly, by providing a fuse portion in a main body portion connected to the electrode assembly, the fuse portion is melted when an event such as thermal runaway occurs to enable electrical separation. In addition, a problem such as disconnection or separation due to physical shock such as external shock can be prevented, thereby improving safety. In an example embodiment, disclosed is a secondary battery comprising: an electrode assembly having a first electrode plate, a separator, and a second electrode plate; a case accommodating the electrode assembly and having an open upper end; a cap assembly sealing the upper end of the case; and a first collector plate electrically connecting the first electrode plate of the electrode assembly and the cap assembly, wherein the first collector plate includes a first main body portion fixed to an upper surface of the electrode assembly and a first tab portion extended and bent from the first main body portion and fixed to the cap assembly, and a first fuse portion is provided in the first main body portion.

## Description

### FIELD

Embodiments of the present disclosure relate to a secondary battery and an electric device comprising the secondary battery.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments of the present disclosure provide a secondary battery capable of improving safety by including a fuse portion that is melted when an event such as thermal runaway occurs on a current collector plate.

These and other aspects and features of the present disclosure will be described in or will be apparent from the following description of embodiments of the present disclosure.

A secondary battery according to an aspect of the present disclosure may include: an electrode assembly having a first electrode plate, a separator, and a second electrode plate; a case accommodating the electrode assembly and having an open upper end; a cap assembly sealing the upper end of the case; and a first collector plate electrically connecting the first electrode plate of the electrode assembly and the cap assembly, wherein the first collector plate includes a first main body portion fixed to an upper surface of the electrode assembly and a first tab portion extended and bent from the first main body portion and fixed to the cap assembly, and a first fuse portion may be provided in the first main body portion.

The first fuse portion may be formed of a notch or a hole.

The first tab portion may have a rectangular shape.

The first main body portion may include a first side formed as a straight line on one side connected to the first tab portion, and a second side formed as a circular curve corresponding to the top surface shape of the electrode assembly.

The first fuse portion may be provided in a first region, which is a region ranging from both edges where the first tab portion and the first main body portion are connected to the center of the first main body portion.

The center of the first main body portion may be positioned corresponding to a core of the electrode assembly.

The first region may have a fan shape.

The circumference of the second side is larger than that in a circumstance where the first main body portion is a semicircle.

The first main body portion may be fixed and welded to the electrode assembly in a region other than the first region.

The first fuse portion may be provided in the form of two lines connecting the center of the first main body portion from both edges where the first tab portion and the first main body portion are connected.

The first fuse portion may be provided in an adjacent region of the first main body portion connected to the first tab portion.

The first fuse portion may be provided in a direction corresponding to the width of the first tab portion.

The first fuse portion may have a plurality of holes spaced apart from one another.

The first tab portion may have a width of one side connected to the first main body portion that is larger than the width of another region.

The first main body portion may further include an additional groove formed from the outside to the inside at a corner connected to the first tab portion.

The additional groove may be formed in an arch shape such that one side from the first side of the first main body portion is positioned on a same line as that of the first tab portion.

The secondary battery may further include a second collector plate which is positioned between the case and the electrode assembly and electrically connects the case and the second electrode plate.

The second collector plate may include a second main body portion fixed to the lower surface of the electrode assembly, and a second tab portion extended and bent from the second main body portion and fixed to the case, and a second fuse portion may be provided on the second main body portion.

The secondary battery may further include an insulating gasket positioned between the case and the cap assembly.

According to embodiments of the present disclosure, in a collector plate that electrically connects an electrode assembly and a cap assembly, or electrically connects a case and an electrode assembly, by providing a fuse portion in a main body portion connected to the electrode assembly, the fuse portion is melted when an event such as thermal runaway occurs to enable electrical separation. In addition, a problem such as disconnection or separation due to physical shock such as external shock can be prevented, thereby improving safety.

A method of manufacturing a secondary battery according to embodiments of the present disclosure may include: providing an electrode assembly having a first electrode plate, a separator, and a second electrode plate; providing a case accommodating the electrode assembly and having an open upper end; a cap assembly sealing the upper end of the case; and providing a first collector plate electrically connecting the first electrode plate of the electrode assembly and the cap assembly, wherein the first collector plate includes a first main body portion fixed to an upper surface of the electrode assembly and a first tab portion extended and bent from the first main body portion and fixed to the cap assembly, and a first fuse portion may be provided in the first main body portion.

However, the technical effects to be achieved in the embodiment of the disclosure are not limited to the technical problems mentioned herein, and other technical effects not mentioned herein will be clearly understood from the following description by those skilled in the art to which the disclosure belongs.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a perspective view showing a secondary battery according to the present disclosure.
FIG. 2 is a cross-sectional view of the secondary battery in FIG. 1.
FIG. 3 is an enlarged cross-sectional view showing a cap assembly portion in FIG. 2.
FIGS. 4 to 10 are plan views showing a collector plate in the secondary battery shown in FIGS. 1 and 2.
FIGS. 11 and 12 are perspective views showing a battery pack comprising an exemplary secondary battery according to the present disclosure. FIGS. 13 and 14 are, respectively, a perspective view and a side view showing a vehicle including an exemplary battery pack according to the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way.

The embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a circumstance having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to one another, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

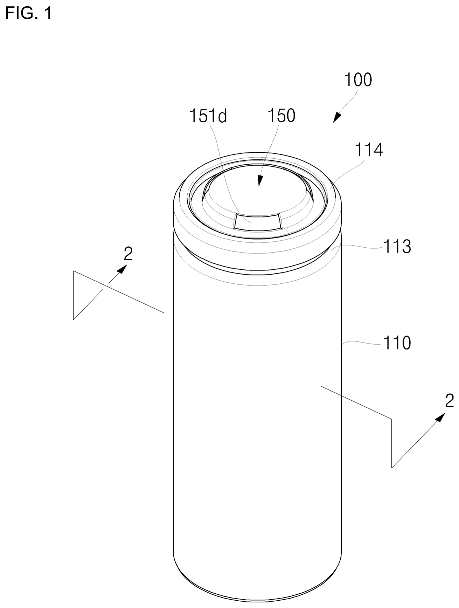

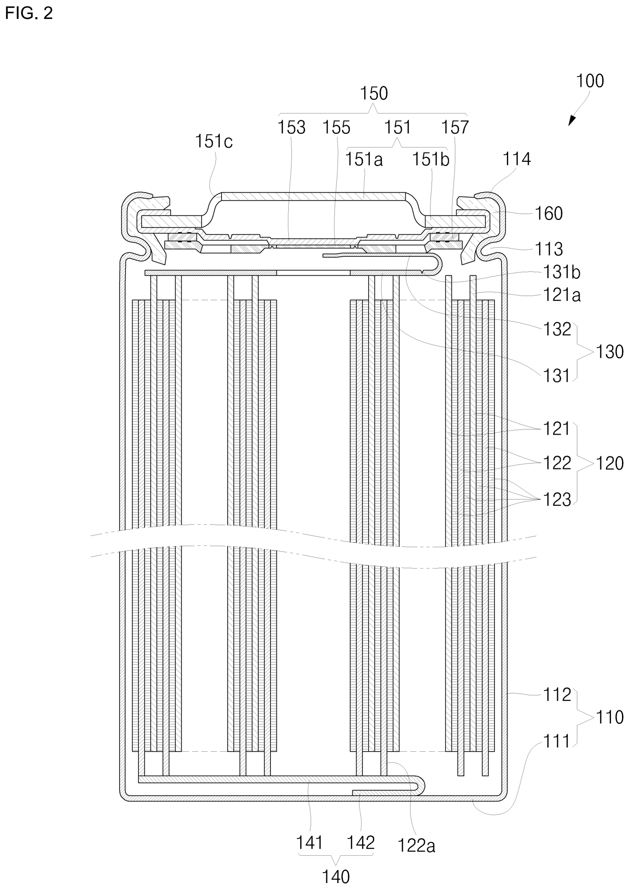

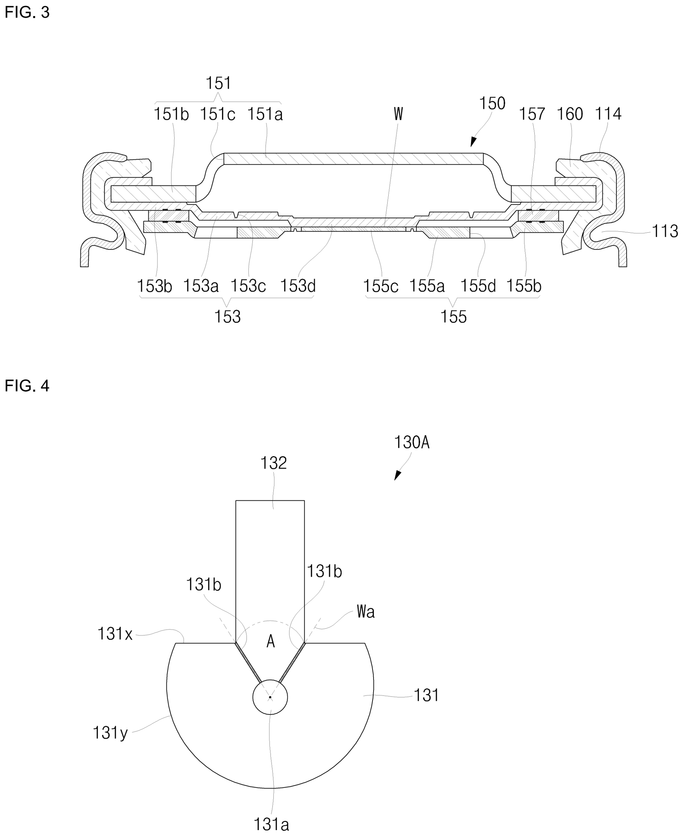

FIG. 1 is a perspective view showing a secondary battery according to the present disclosure, FIG. 2 is a cross-sectional view of the secondary battery in FIG. 1, and FIG. 3 is an enlarged cross-sectional view showing a cap assembly portion in FIG. 2.

As shown in FIGS. 1 to 3, the secondary battery 100 according to the present disclosure may include a case 110, an electrode assembly 120, a first collector plate 130, a second collector plate 140, a cap assembly 150, and an insulating gasket 160. However, the components of the secondary battery 100 are not limited thereto, and according to embodiments, other components may be added or at least one component may be omitted.

The case 110 may be a cylindrical can. The case 110 includes a circular bottom portion 111 and a side portion 112 that extends upward from the bottom portion 111 by a predetermined length. The upper portion of the case 110 is open during the manufacturing process of the secondary battery. Therefore, the electrode assembly 120 may be inserted into the case 110 together with an electrolyte during the assembling process of the secondary battery. The case 110 may be formed of steel, a steel alloy, aluminum, an aluminum alloy, or an equivalent thereof, but the material is not limited thereto. In addition, the case 110 may have a beading part 113 formed inward at the lower portion with respect to the cap assembly 150 so that the cap assembly 150 does not come off to the outside, and a crimping part 114 formed inward at the upper portion thereof. The case 110 may not be provided with a beading part and a crimping part.

The electrode assembly 120 is accommodated inside the case 110. The electrode assembly 120 may include a first electrode plate 121, a second electrode plate 122, and a separator 123. Here, the first electrode plate 121 may be a positive electrode plate, and the second electrode plate 122 may be a negative electrode plate. Of course, the opposite may also be possible. The first electrode plate 121 may be coated with a first electrode active material (for example, a transition metal oxide (LiCoO2, LiNiO2, LiMn2O4, etc.)), and the second electrode plate 122 may be coated with a second electrode active material (for example, graphite, carbon, etc.). In addition, the separator 123 may be positioned between the first electrode plate 121 and the second electrode plate 122 to prevent a short circuit and allow only the movement of lithium ions.

The electrode assembly 120 may be wound in an approximately cylindrical shape after the first electrode plate 121, the separator 123, the second electrode plate 122, and the separator 123 are stacked. Here, the first electrode plate 121 may be an aluminum (Al) foil, the second electrode plate 122 may be a copper (Cu) or nickel (Ni) foil, and the separator 123 may be polyethylene (PE) or polypropylene (PP), but the present disclosure does not limit the materials listed herein. In addition, the first electrode plate 121 may include at least one first electrode tab 121a that protrudes upward by a certain length, and the second electrode plate 122 may include at least one second electrode tab 122a that protrudes downward by a certain length and extends. In addition, the first electrode tab 121a may be an uncoated portion on which a first electrode active material made of aluminum is not coated, while the second electrode tab 122a may be an uncoated portion on which a second electrode active material made of copper or nickel is not coated. Here, the present disclosure does not limit the materials of the first electrode tab 121a and the second electrode tab 122a.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}O_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on one another.

The first collector plate 130 may electrically connect between the cap assembly 150 and the first electrode tab 121a of the electrode assembly 120. The first collector plate 130 may include a first main body portion 131 that contacts and is welded to the first electrode tab 121a located on an upper surface of the electrode assembly 120, and a first tab portion 132 that extends from the first main body portion 131 and is in contact with and welded to the cap assembly 150. Here, the first main body portion 131 may be a circular plate corresponding to the upper surface of the electrode assembly 120. The first tab portion 132 may be a rectangular plate, one side of which may be connected to the first main body portion 131 and the other side of which may be in contact with and welded to the cap-down 155 of the cap assembly 150. The first main body portion 131 may have a first fuse portion in a region adjacent to the first tab portion 132. The structure of the first collector plate 130 will be described in detail herein.

The second collector plate 140 may electrically connect the bottom portion 111 of the case 110 and the second electrode tab 122a of the electrode assembly 120 to one another. The second collector plate 140 may include a second main body portion 141 positioned on the lower surface of the electrode assembly 120 and in contact with and welded to the second electrode tab 122a, and a second tab portion 142 extending from the second main body portion 141. Here, the second main body portion 141 may be a circular plate corresponding to the lower surface of the electrode assembly 120. The second tab portion 142 may be a rectangular plate, one side of which may be connected to the second main body portion 141 and the other side of which may be in contact with and welded to the bottom portion 111 of the case 110. The second main body portion 141 may have a second fuse portion in a region adjacent to the second tab portion 142. The configuration of the second collector plate 140 may be similar to that of the first collector plate 130, which will be described in detail herein.

The cap assembly 150 may be coupled and fixed to the open upper portion of the case. The cap assembly 150 may include a safety plate 153, an insulator 157 installed at a lower portion of an edge region of the safety plate 153, a cap-down 155 coupled to the insulator 157 and the safety plate 153 and having a through hole 155d formed therein. In some examples, the cap assembly 150 may further include a cap-up 151 installed and fixed at an upper portion of the safety plate 153.

The cap-up 151 is a portion exposed to the outside of the can 100. The cap-up 151 has a shape in which the central region protrudes convexly from a circular metal plate. In addition, the cap-up 151 has a gas discharge hole 151c formed therein, which provides a path through which gas generated inside the case 110 may be discharged. The cap-up 151 is electrically connected to the electrode assembly 120 and may be an external terminal of the electrode assembly 120.

The cap-up 151 may have a shape in which a central region protrudes convexly from a metal plate in the shape of a disk. The protruding region of the cap-up 151 may be referred to as a first region 151a, an edge region may be referred to as a second region 151b, and an inclined region between the first region 151a and the second region 151b may be referred to as a third region (not shown). A plurality of discharge holes 151c that serve as gas discharge passages may be provided in the third region.

The safety plate 153 has a roughly circular shape and the first region 151a of the cap-up 151 may be surrounded by the edge thereof. The safety plate 153 may include a central region 153a positioned below the first region 151a of the cap-up 151 and an edge region 153b surrounding the lower side, side wall, and upper side of the second region 151b of the cap-up 151. The edge region 153b may include a first region positioned below the second region 151b of the cap-up 151, a second region bent upward from the first region, and a third region bent from an upper end of the second region and covering the upper side of the second region 151b of the cap-up 151. A notch 153c may be provided in the central region 153a of the safety plate 153. The safety plate 153 may further be provided with a protrusion part 153d that protrudes downward at the center of the central region 153a. The protrusion part 153d may protrude from the center of the central region 153a toward the cap-down 155 and may be welded and fixed to the cap-down 155 (the welding portion is indicated by W).

The cap-down 155 has a roughly circular shape and is positioned below the safety plate 153. The cap-down 155 may have a smaller diameter than the cap-up 151 or the safety plate 153. However, the cap-down 155 may have a larger diameter than the diameter of the notch 153c of the safety plate 153. The cap-down 155 includes a first support portion 155a, an inclined portion (not shown), a second support portion 155b, and a connecting portion 155c.

The first support portion 155a may be positioned approximately below the central region 153a of the safety plate 153. In addition, the connecting portion 155c may be provided at the center of the first support portion 155a. The connecting portion 155c may have a smaller thickness than other portions, and may be positioned below the protrusion part 153d in the central region 153a of the safety plate 153. Here, the upper surface of the first support portion 155a may be flat, but the lower surface of the region where the connecting portion 155c is positioned may be concave in an upward direction compared to other regions. The connecting portion 155c may be welded to be in contact with the aforementioned protrusion part 153d. When the notch 153c is broken, the connecting portion 155c may be discharged together with the protrusion part 153d and separated from the cap-down 155. The first support portion 155a may have a plurality of through holes 155d penetrating between the upper surface and the lower surface.

The inclined portion may extend upward from an outer diameter portion of the first support portion 155a. The inclined portion may connect an outer diameter of the first support portion 155a and an inner diameter of the second support portion 155b. The second support portion 155b may be disposed at a lower portion spaced apart from the edge region 153b of the safety plate 153.

The insulator 157 may be positioned between the edge region 153b of the safety plate 153 and the second support portion 155b of the cap-down 155. The insulator 157 has a ring shape in a plane, the upper surface thereof may be in contact with and fixed to the safety plate 153, and the lower surface thereof may be in contact with and fixed to the cap-down 155. The central region 153a of the safety plate 153 and the first support portion 155a of the cap-down 155 may face one another through the insulator 157.

The insulator 157 may be made of an insulating material so that the edge region 153b of the safety plate 153 and the second support portion 155b of the cap-down 155 are spaced apart from one another and insulated from one another. For example, the insulator 157 may be made of a resin material such as polyethylene (PE), polypropylene (PP), or polyethylene terephthalate (PET).

In general, when a short circuit occurs in the secondary battery 100, the internal pressure increases and the internal gas can be discharged through the through holes155d of the cap-down 155. Here, the protrusion part 153d of the safety plate 153 may rise due to the discharged gas and be electrically separated from the cap-down 155. Here, the cap-down 155 may be electrically separated from the safety plate 153 when the connecting portion 155c welded to the protrusion part 153d is torn. In addition, when the internal pressure of the case 110 of the safety plate 153 becomes higher than a rupture pressure higher than the operating pressure of the safety plate 153, the notch 153c is ruptured and explosion of the secondary battery 100 can be prevented.

The insulating gasket 160 is installed in the upper opening of the case 110. Here, the insulating gasket 160 is formed to be compressed substantially between the beading part 113 and the crimping part 114 formed on the side portion 112 of the case 110. That is, the insulating gasket 160 may be positioned between the cap assembly 150 and the case 110. In more detail, the insulating gasket 160 is assembled in close contact between the outer periphery of the cap-up 151 and the safety plate 153 and the upper opening of the case 110. Here, the cap-up 151 coupled to the safety plate 153 may be fixed to the upper end of the case 110 in state in which the insulating gasket 160 is interposed by the crimping part 114 formed on the upper end of the case 110.

The insulating gasket 160 can be formed of a resin material such as polyethylene (PE), polypropylene (PP), polyethylene terephthalate (PET), etc. The insulating gasket 160 can prevent the cap assembly 150 from being separated from the case 110.

In addition, an electrolyte (not shown in the drawing) is injected into the case 110, which allows lithium ions generated by an electrochemical reaction in the first electrode plate 121 and the second electrode plate 122 inside the battery to move during charging and discharging. The electrolyte may be a non-aqueous organic electrolyte that is a mixture of a lithium salt and a high-purity organic solvent. In addition, the electrolyte may be a polymer using a polymer electrolyte or a solid electrolyte, and the type of electrolyte is not limited here.

FIG. 4 is a plan view showing a collector plate in the secondary battery shown in FIGS. 1 to 3. Here, the collector plate may be a first collector plate and/or a second collector plate. For example, at least one of the first collector plate and the second collector plate may be as shown in FIG. 4. For convenience of explanation, the collector plate will be described herein as a first collector plate 130A. In addition, the first collector plate 130A will be described with reference to FIGS. 2 and 4.

The first collector plate 130A covers the upper surface of the electrode assembly 120 and may include a first main body portion 131 welded to the first electrode tab 121a, and a first tab portion 132 extending from the first main body portion 131 and in contact with and welded to the cap assembly 150. The first collector plate 130A may be formed of a metal plate. For example, the first collector plate 130A may be made of aluminum.

The first main body portion 131 may be a plate having a shape corresponding to the upper surface of the electrode assembly 120. However, while the upper surface of the electrode assembly 120 is circular, the first main body portion 131 may have one side connected to the first tab portion 132 in a straight line to expose a part of the upper surface of the electrode assembly 120. For example, the first main body portion 131 may be a plane having a first side 131x formed as a straight line and a second side 131y formed as a circular curve. In addition, a diameter of the second side 131y may correspond to a diameter of the upper surface of the electrode assembly 120. Here, the circumference of the second side 131y may be larger than the circumference in a circumstance where the first main body portion 131 is a semicircle. In some examples, the first main body portion 131 may have a first hole 131a at a position corresponding to the center of gravity of the electrode assembly 120. The first hole 131a may provide a path through which gas generated inside the electrode assembly 120 may be discharged. Here, the first hole 131a may be spaced apart from the first side 131x of the first main body portion 131.

The first tab portion 132 may be a rectangular plate. The first tab portion 132 may extend outward from the first side formed as a straight line in the first main body portion 131. For example, the first tab portion 132 may have one side connected to the first main body portion 131 and the other side bent at least once to be in contact with and welded to the cap-down 155. Here, the first tab portion 132 may not overlap the through holes 155d of the cap-down 155 in a plane.

The first main body portion 131 may have a first fuse portion 131b that is thinner than other regions or has a hole and thus has a smaller area. For example, the first fuse portion 131b may be provided in the first region A, which is a region from both edges where the first tab portion 132 and the first main body portion 131 are connected to the center of the first main body portion 131. Here, the center of the first main body portion 131 may be a position corresponding to the core, which is the winding center of the electrode assembly 120.

Here, the first region A may have a fan shape. The first fuse portion 131b may be a notch for reducing the thickness of the first main body portion 131, or may be provided with at least one hole.

Here, when the first fuse portion 131b is a notch, the cross-sectional shape of the notch can be implemented in various manners including, for example, in a V shape, U shape, or square shape. However, the thickness of the first fuse portion 131b may be smaller than the thicknesses of other regions due to the notch, so that it can function as a fuse. The first fuse portion 131b can be provided in the form of two lines connecting the first tab portion 132 and the first main body portion 131 from both edges connected to the center of the first main body portion 131. In addition, the first fuse portion 131b may be provided in the form of a notch.

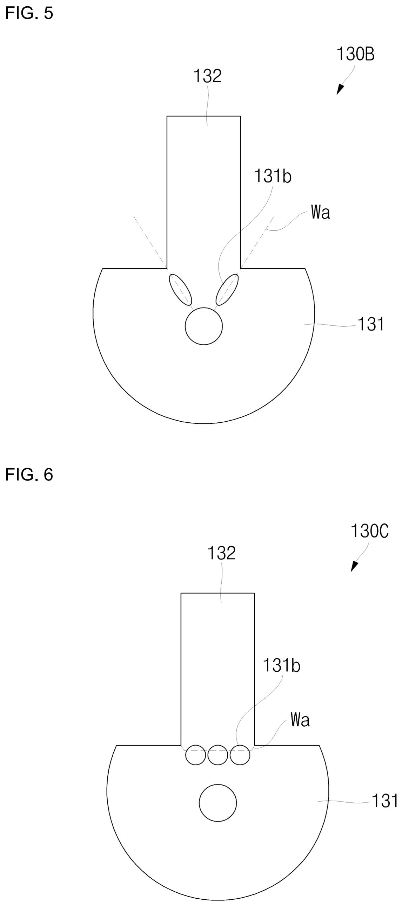

As another example, as shown in FIG. 5, the first fuse portion 131b may be provided in the form of a hole. As shown in FIG. 5, when the first fuse portion 131b is formed as a hole, a first collector plate 130B may have a smaller width than other regions to function as a fuse. However, the first fuse portion 131b may include at least one of a notch and a hole and may be located within the first region A. The first fuse portion 131b may be melted for the safety of the secondary battery 100 when an event such as thermal runaway occurs. As another example, if a fuse portion is located at the first tab portion 132, a problem of the fuse portion being cut off or separated may occur even due to physical impact such as external impact.

Here, the first region A in which the first fuse portion 131b is located may not be welded to the upper surface of the electrode assembly 120. That is, in the first main body portion 131, another region excluding the first region A may be in contact with and welded to the first electrode tab 121a of the electrode assembly 120.

The first collector plates 130A and 130B shown in FIGS. 4 and 5 are melted along the melting line Wa when an event such as thermal runaway occurs, thereby separating the first main body portion 131 and the first tab portion 132, thereby electrically separating the cap assembly 150 and the electrode assembly 120. Such configurations of the first collector plates 130A and 130B shown in FIGS. 4 and 5 may also be applied to the second collector plate 140, and when the fuse portion provided in the second collector plate 140 is melted, the second main body portion 141 and the second tab portion 142 of the second collector plate 140 are electrically separated, thereby electrically separating the electrode assembly 120 and the case 110.

Referring to FIGS. 6 to 10, other examples of first collector plates are shown.

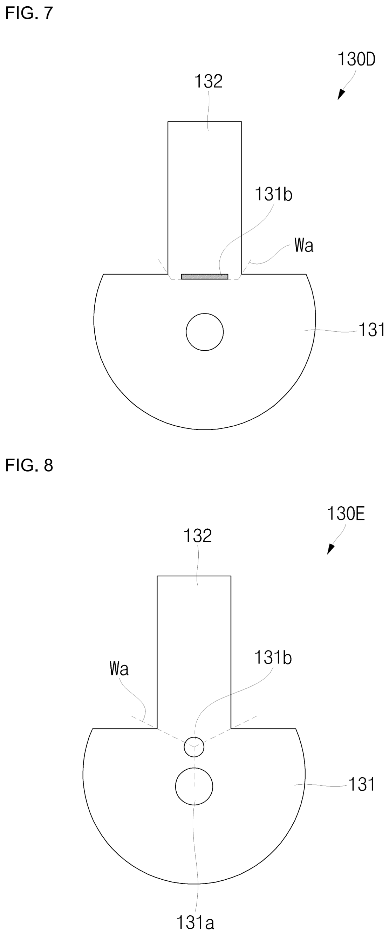

First, in FIG. 6, a first collector plate 130C may be provided with a first fuse portion 131b in an adjacent region connected to the first tab portion 132 in the first region (A, see FIG. 4) of the first collector plate 130 from the first main body portion 131. Here, the first fuse portion 131b may have two or more holes spaced apart from one another in a direction corresponding to the width of the first tab portion 132. Here, the melting line Wa may be provided so as to be parallel to the width direction of the first tab portion 132 in which a plurality of holes are spaced apart and arranged. As another example, the first fuse portion 131b of the first collector plate 130C in FIG. 6 is shown as a plurality of holes, but may be provided in the form of a notch, as shown in FIG. 7. In addition, the notch-shaped first fuse portion 131b in a first collector plate 130D may be provided in the entire area of the melting line Wa or only in a partial region, and the shape thereof may be changed in various manners.

When an event such as thermal runaway occurs, first collector plates 130C and 130D are melted along the melting line Wa, so that the first main body portion 131 and the first tab portion 132 are separated from one another, thereby electrically separating the cap assembly 150 and the electrode assembly 120.

As another example, as shown in FIG. 8, a first collector plate 130E may be provided with a first fuse portion 131b as a single hole. Here, the melt line (Wa) may be formed in plurality along melting lines that allow for facilitated melting starting from the single hole. For example, as shown in FIG. 8, the melting line Wa may include two lines extending to the center of the first fuse portion 131b from both edges where the first tab portion 132 and the first main body portion 131 are connected, and one line extending from the center of the first fuse portion 131b to the center of the first hole 131a. That is, the melting line Wa may be provided as at least one line along a region in the first main body portion 131 that is smaller in width or thickness than other regions by the first fuse portion 131b.

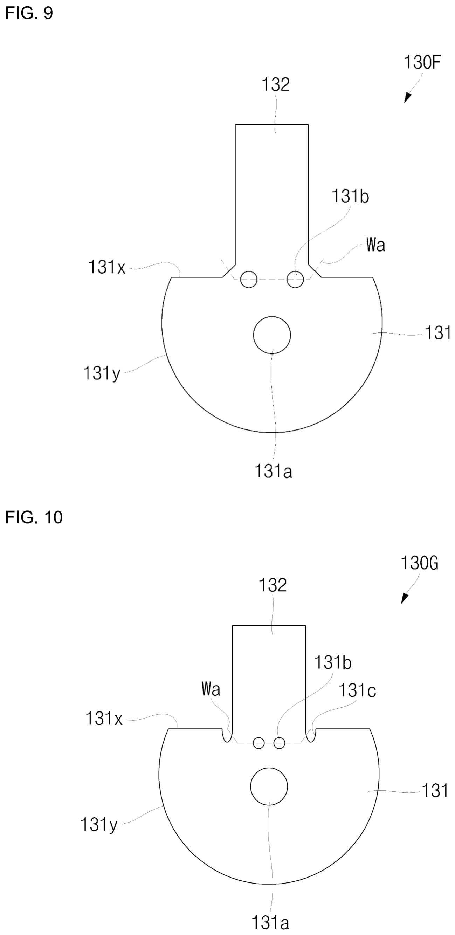

As another example, a first fuse portion 131b of a first collector plate 130F shown in FIG. 9 is similar to the first fuse portion 131b of the first collector plate 130C shown in FIG. 6, differing only in the number of holes. However, the first collector plate 130F shown in FIG. 9 may have a first tab portion 132 having a larger width on one side connected to the first main body portion 131 than on the other side. That is, the first tab portion 132 may further have an inclined portions that is wider on both sides connected to the first main body portion 131. The first collector plate 130F can prevent the first tab portion 132 and the first main body portion 131, where stress may be concentrated due to the inclined portion, from being cut off or separated by physical impact, such as external impact.

As another example, a first collector plate 130G shown in FIG. 10 may have a similar structure to the first collector plate 130F shown in FIG. 9. However, the first collector plate 130G shown in FIG. 10 may further have an additional groove 131c provided at a corner connecting the first tab portion 132 and the first main body portion 131. Here, the additional groove 131c may be provided in the direction of the first main body portion 131 so as not to affect the width of the first tab portion 132. Preferably, the additional groove 131c may be formed in an arch shape so that one side is positioned on the same line as the first tab portion 132. The additional groove 131c may be provided from the first side 131x of the first main body portion 131 toward the center of the first main body portion 131. The additional groove 131c may be provided to facilitate melting of the melting line Wa.

The secondary battery according to the herein-described embodiment can be used to manufacture a battery pack.

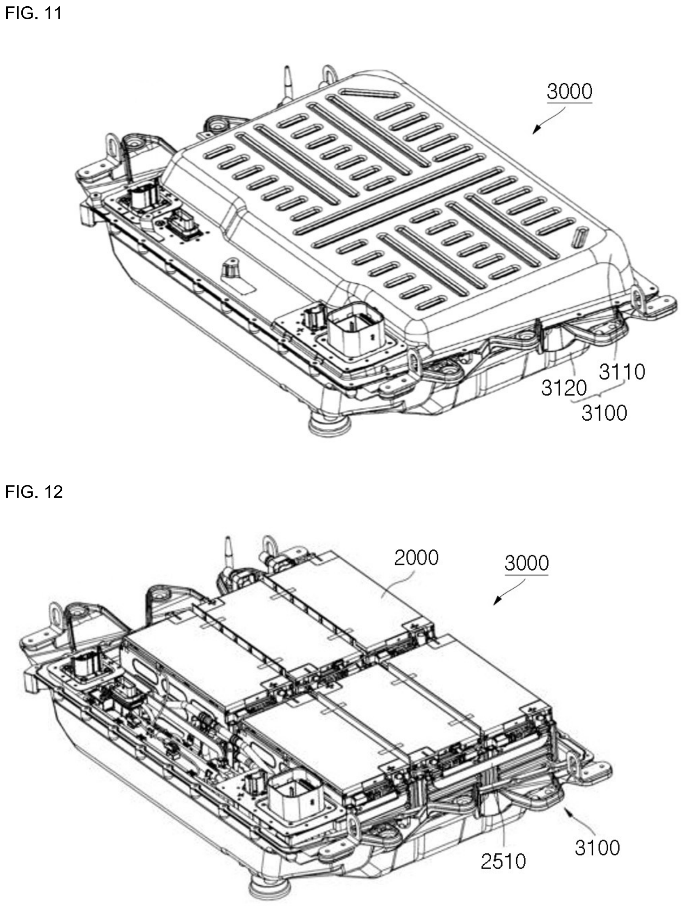

FIGS. 11 and 12 are perspective views showing an exemplary battery pack 3000. The battery pack 3000 may include a plurality of battery modules 2000 and a housing 3100 configured to accommodate the plurality of battery modules 2000. For example, the housing 3100 may include a first housing 3110 and a second housing 3120, which are coupled to one another in directions facing one another with the plurality of battery modules 2000 interposed therebetween. The plurality of battery modules 2000 may be electrically connected to one another using bus bars 2510. The plurality of battery modules 2000 may be electrically connected to one another in series, in parallel, or in a combination thereof, so that desired electrical output may be obtained. In some examples, the battery pack 3000 including a secondary battery may be mounted on an electric device. For example, the electric device may be an automobile. The automobile may be, for example, an electric vehicle, a hybrid vehicle, or a plug-in hybrid vehicle. The automobile may include a four-wheeled vehicle or a two-wheeled vehicle.

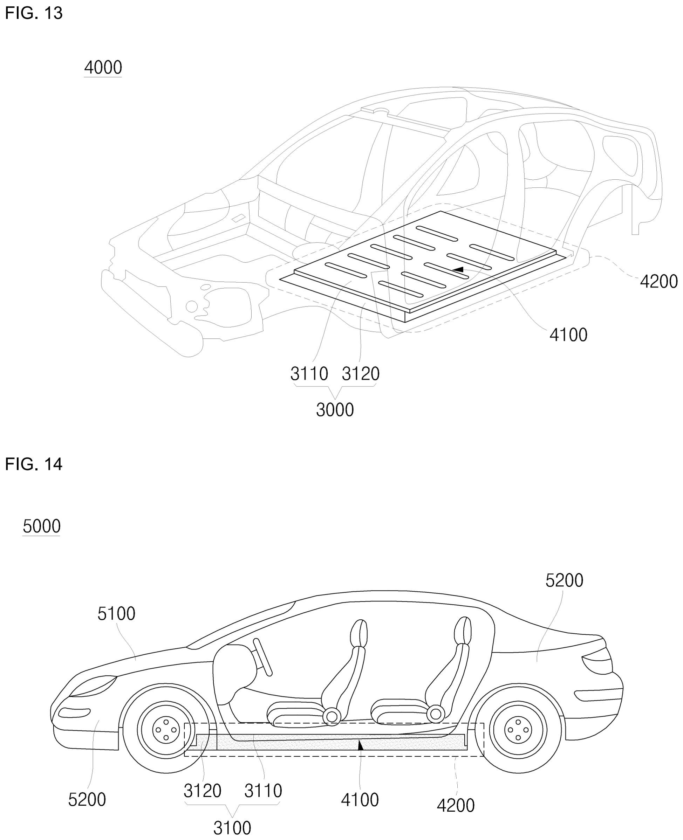

FIGS. 13 and 14 are, respectively, a perspective view showing an exemplary vehicle body 4000 and a side view showing an exemplary vehicle 5000. As shown in FIG. 13, the battery pack 3000 may include a battery pack cover 3110 (which may correspond to the first housing), which is a portion of a vehicle underbody 4100, and a pack frame 3120 (which may correspond to the second housing), which is disposed beneath the vehicle underbody 4100. The battery pack cover 3110 and the pack frame 3120 may be integrally formed with a vehicle bottom portion 4200. The vehicle underbody 4100 may separate the interior and the exterior of the vehicle from one another, and the pack frame 3120 may be disposed outside the vehicle.

As shown in FIG. 14, the vehicle 5000 may include a vehicle body 4000 and various parts coupled to the vehicle body 4000, such as a hood 5100 located at the front portion of the vehicle and fenders 5200 located at the front and rear portions of the vehicle. The vehicle 5000 may include the battery pack 3000 including the battery pack cover 3110 and the pack frame 3120, and the battery pack 3000 may be coupled to the vehicle body 4000.

The above is only one embodiment for implementing a secondary battery according to the disclosure, the disclosure is not limited to the above embodiment, and there is a technical of the disclosure to the extent that various modifications can be made by anyone having ordinary skill in the art to which the disclosure pertains without departing from the gist of the disclosure as claimed in the following claims.

## Claims

1. A secondary battery (100) comprising:
an electrode assembly (120) having a first electrode plate (121), a separator (123), and a second electrode plate (122);
a case (110) accommodating the electrode assembly (120) and having an open upper end;
a cap assembly (150) sealing the upper end of the case (110); and
a first collector plate (130) electrically connecting the first electrode plate (121) of the electrode assembly (120) and the cap assembly (150),
wherein the first collector plate (130) includes a first main body portion (131) electrically connected to an upper surface of the electrode assembly (120) and a first tab portion (132) extended and bent from the first main body portion (131) and electrically connected to the cap assembly (150), and a first fuse portion (131b) is provided in the first main body portion (131).

2. The secondary battery (100) as claimed in claim 1, wherein the first fuse portion (131b) is formed of a notch (153c) or a hole.

3. The secondary battery (100) as claimed in claim 1 or 2, wherein the first tab portion (132) has a rectangular shape.

4. The secondary battery (100) as claimed in any one of the preceding claims, wherein the first main body portion (131) comprises: a first side (131x) formed as a straight line on one side connected to the first tab portion (132); and a second side (131y) formed as a circular curve corresponding to the top surface shape of the electrode assembly (120).

5. The secondary battery (100) as claimed in claim 4, wherein the first fuse portion (131b) is provided in a first region (A), which is a region ranging from both edges where the first tab portion (132) and the first main body portion (131) are connected to the center of the first main body portion (131);
wherein preferably the center of the first main body portion (131) is positioned corresponding to a core of the electrode assembly (120);
wherein preferably the first region (A) has a fan shape.

6. The secondary battery (100) as claimed in claim 4 or 5, wherein the circumference of the second side (131y) is larger than that in a circumstance where the first main body portion (131) is a semicircle.

7. The secondary battery (100) as claimed in any one of the claims 4 to 6, wherein the first main body portion (131) is electrically connected and welded to the electrode assembly (120) in a region other than the first region (A).

8. The secondary battery (100) as claimed in any one of the preceding claims, wherein the first fuse portion (131b) is provided in the form of two lines connecting the center of the first main body portion (131) from both edges where the first tab portion (132) and the first main body portion (131) are connected.

9. The secondary battery (100) as claimed in any one of the preceding claims, wherein the first fuse portion (131b) is provided in an adjacent region of the first main body portion (131) connected to the first tab portion (132);
wherein preferably the first fuse portion (131b) is provided in a direction corresponding to the width of the first tab portion (132);
wherein preferably the first fuse portion (131b) has a plurality of holes spaced apart from one another.

10. The secondary battery (100) as claimed in any one of the preceding claims, wherein the first tab portion (132) has a width of one side connected to the first main body portion (131) that is larger than the width of another region.

11. The secondary battery (100) as claimed in any one of the claims 4 to 10, wherein the first main body portion (131) further comprises an additional groove (131c) formed from the outside to the inside at a corner connected to the first tab portion (132);
wherein preferably the additional groove (131c) is formed in an arch shape such that one side from the first side (131x) of the first main body portion (131) is positioned on a same line as that of the first tab portion (132).

12. The secondary battery (100) as claimed in any one of the preceding claims, further comprising a second collector plate (140) which is positioned between the case (110) and the electrode assembly (120) and electrically connects the case (110) and the second electrode plate (122).

13. The secondary battery (100) as claimed in any one of the preceding claims, wherein the second collector plate (140) comprises: a second main body portion (141) which is electrically connected to the lower surface of the electrode assembly (120); and a second tab portion (142) which extends and is bent from the second main body portion (141) to be electrically connected to the case (110), and a second fuse portion is provided in the second main body portion (141).

14. The secondary battery (100) as claimed in any one of the preceding claims, further comprising an insulating gasket (160) positioned between the case (110) and the cap assembly (150).

15. An electric device comprising the secondary battery of any one of the claims 1 to 14.
